# FASCICULE DE BREVET EUROPEEN

(11) **EP 2 911 905 B1**
(45) Date de publication et mention de la délivrance du brevet: **13.07.2016**
(21) Numéro de dépôt: 13779604.1
(22) Date de dépôt: 22.10.2013
(51) Int. Cl.: B60K 11/08, F24F 13/14, F01P 7/12

(54) **VOLET D'OBTURATION DE VENTILATION POUR AUTOMOBILE A FAIBLE SIGNATURE AERAULIQUE**
VERSCHLUSSKLAPPE FÜR KRAFTFAHRZEUGBELÜFTUNG MIT NIEDRIGER LUFTTECHNISCHER SIGNATUR
MOTOR VEHICLE VENTILATION CLOSURE FLAP WITH LOW AERAULIC SIGNATURE

(30) Priorité: 25.10.2012 FR 1260190
(43) Date de publication de la demande: 02.09.2015
(73) Titulaire: Valeo Systemes Thermiques, 78320 Le Mesnil Saint Denis (FR)
(72) Inventeur: VACCA, Frédéric, F-78910 Behoust (FR); LANARD, Jean-Louis, F-78810 Feucherolles (FR)
(74) Mandataire: Metz, Gaëlle
(86) Numéro de dépôt international: PCT/EP2013/072032
(87) Numéro de publication internationale: WO 2014/064081

(56) Documents cités:
- WO-A1-2011/009212
- DE-A1- 4 422 537
- US-A1- 2003 047 365
- US-A1- 2012 019 025

## Description

Le domaine de la présente invention est celui de l'automobile et, plus particulièrement celui des dispositifs pour le refroidissement des équipements de l'automobile.

Les véhicules à moteur thermique ont besoin d'évacuer les calories que génère leur fonctionnement et ils sont pour cela équipés d'échangeurs thermiques, notamment des radiateurs de refroidissement, qui sont placés à l'avant du véhicule et qui sont traversés par de l'air extérieur. Pour forcer la circulation de cet air à travers le ou les échangeurs, un ventilateur est placé en amont ou en aval de ceux-ci, l'amont ou l'aval s'appréciant dans ce document en référence à la direction d'écoulement de l'air.

Les entrées pour l'air de refroidissement sont placées à l'avant du véhicule automobile, au niveau de sa face frontale, et des grilles de calendre sont classiquement placées en travers d'elles pour permettre la circulation de l'air vers le ou les échangeurs tout en limitant l'entrée de corps étrangers.

Généralement les entrées d'air sont au nombre de deux, une entrée pour une voie dite haute, placée au dessus du pare-choc du véhicule et une entrée pour une voie dite basse, qui prélève de l'air en dessous de ce même pare-choc. Les échangeurs de chaleur, tels que des condenseurs ou des radiateurs, sont, quant à eux, placés en aval de la poutre qui porte le pare-choc et alimentés par les deux voies haute et basse.

Il est connu d'utiliser des volets pilotés en face avant afin de réduire le coefficient de traînée et aussi d'améliorer le fonctionnement du refroidissement et de la climatisation. Ces volets, qui peuvent être disposés dans la voie basse derrière les grilles de calendre sont disposés horizontalement ou verticalement en travers du flux et peuvent être, soit ouverts et laisser passer le maximum d'air, soit plus ou moins refermés et alors obturer, partiellement ou entièrement, cette voie basse.

Pour augmenter la rigidité des volets, ceux-ci sont couramment réalisés sous la forme de deux plaques longilignes coplanaires s'étendant selon leur axe de rotation et qui sont séparées par une nervure s'étendant perpendiculairement à leur plan. Une telle nervure permet de rigidifier le volet mais elle constitue une source d'augmentation de la signature aéraulique des volets en position ouverte.

Par ailleurs, les volets présentent des extrémités situées de part et d'autre d'un plan passant par ledit axe de rotation de manière à permettre un chevauchement de l'une des extrémités dudit volet par l'autre extrémité d'un même volet disposé de manière adjacente, en position fermée des volets. On dispose ainsi d'une bonne étanchéité, notamment par un contact plan sur plan. Cependant, de telles extrémités constituent une autre source d'augmentation de la signature aéraulique des volets en position ouverte.

Dans cette position, les volets constituent ainsi un obstacle qui s'oppose, par sa surface frontale, à la circulation de l'air, ce qui nuit au rendement du système de refroidissement du véhicule. Plus cette surface est importante, plus la perte de charge aéraulique due à cet obstacle est importante et il importe donc de réduire au maximum son impact sur la circulation de l'air. Une des solutions envisageables serait de réduire les épaisseurs de matière mais cette modification entraînerait une réduction de la rigidité des volets, ce qui est incompatible avec une bonne résistance au phénomène de flottement des volets dans le flux d'air.

Un volet selon le préambule de la revendication 1 et connu du document DE 44 22 537 A1.

La présente invention a pour but de proposer un volet qui conserve les avantages précédents de rigidité et d'étanchéité tout en palliant les inconvénients précités, en particulier en offrant une faible signature aéraulique.

A cet effet, l'invention a pour objet un volet d'obturation d'un conduit de ventilation, notamment pour véhicule automobile, s'étendant longitudinalement selon un axe de rotation et comprenant une partie amont et une partie aval reliées par une nervure au niveau de laquelle se trouve ledit axe de rotation, lesdites parties amont et aval présentant des extrémités situées de part et d'autre d'un plan P passant par ledit axe de rotation de manière à permettre un chevauchement de l'une des extrémités dudit volet par l'autre extrémité d'un même dit volet adjacent.

Selon l'invention, ladite partie amont et/ou ladite partie aval est traversée par une cavité longitudinale s'étendant, notamment parallèlement, selon ledit axe de rotation, la ou lesdites parties amont et/ou aval munie de ladite cavité étant situées dans la surface frontale projetée de ladite nervure et de l'extrémité de l'autre partie. Par surface frontale projetée, on entend bien sûr la surface occupée par la projection de la ou des parties du volet en cause selon une direction de projection définie par la direction P orthogonale audit axe de rotation, sur un plan orthogonale à ladite direction de projection.

En conservant lesdites extrémités, on maintient l'étanchéité offerte par les volets précédents. En conservant ladite nervure, on contribue à assurer une rigidité satisfaisante. En outre, en réalisant une cavité dans une partie du volet située dans la signature aéraulique que présente le volet par ailleurs en raison desdites extrémités et de ladite nervure, on offre une solution permettant de diminuer l'épaisseur du volet et donc sa signature aéraulique, sans dégrader sa rigidité. On obtient même une réduction du poids du volet.

Selon l'invention la ou lesdites parties amont et/ou aval munies de ladite cavité comprennent une première et seconde paroi se trouvant de part et d'autre de ladite cavité correspondante et la première paroi comporte une surface plane, parallèle audit plan, se raccordant à un sommet de ladite nervure.

Selon différents modes de réalisation qui pourront être pris ensemble ou séparément :
- ladite cavité est sensiblement centrée entre lesdites première et seconde parois,
- ladite seconde paroi et ladite extrémité de ladite partie amont et/ou aval munie de ladite cavité forme une seconde nervure d'orientation opposée à la nervure au niveau de laquelle se trouve ledit axe de rotation du volet, dite première nervure, et ladite première paroi permet un arc boutement de ladite seconde nervure sur ladite première nervure,
- l'extrémité de la ou desdites parties amont et/ou aval munies de ladite cavité est sensiblement située au niveau de ladite cavité correspondante, selon la direction orthogonale audit plan P,
- la nervure comprend une rainure au niveau de laquelle est prévu ledit axe de rotation,
- ladite rainure forme un U évasé, les branches du U s'éloignant l'une de l'autre en se rapprochant desdites parties amont et aval.

Il est à noter que cette dernière caractéristique permet de diminuer le poids du volet sans nuire à sa rigidité, et ceci sans que celui-ci soit nécessairement muni de la cavité évoquée plus haut. L'invention concerne ainsi également un volet d'obturation d'un conduit de ventilation, notamment pour véhicule automobile, s'étendant longitudinalement selon un axe de rotation et comprenant une partie amont et une partie aval reliées par une nervure au niveau de laquelle se trouve ledit axe de rotation, ladite nervure comprenant une rainure au niveau de laquelle est prévu ledit axe de rotation, ladite rainure formant un U évasé, les branches du U s'éloignant l'une de l'autre en se rapprochant desdites parties amont et aval. On peut d'ailleurs noter que l'évasement du U de la nervure permet également l'abaissement de son sommet et donc une diminution de sa signature aéraulique.

Cela étant, la première paroi pourra comporter une surface plane, parallèle audit plan P, se raccordant à un sommet de ladite nervure, et/ou la seconde paroi pourra comporter une surface plane, parallèle audit plan P, se raccordant à une base de ladite nervure 5. Cette configuration autorise une plus grande profondeur pour la cavité, ce qui améliore la rigidité du volet, sans impact sur l'aérodynamique de celui-ci puisque, comme dit plus haut, la partie munie de la cavité reste dans la signature aéraulique de ladite nervure et/ou de l'extrémité de la partie opposée du volet. Les déflexions de l'air par la surface du volet, en particulier par ladite nervure sont simplement avancées en direction de son bord d'attaque, ou reculée vers son bord de fuite dans le cas d'une cavité placée à l'intérieur de la partie aval.

A ce sujet, ladite cavité est avantageusement située au niveau de l'une seulement desdites parties, notamment la partie amont. L'extrémité de la partie munie de ladite cavité est située, par exemple, dans la surface frontale projetée de ladite nervure.

L'invention porte également sur un procédé de réalisation par injection d'un volet tel que décrit ci-dessus, caractérisé en ce qu'il comporte une injection d'un fluide sous pression au milieu de l'épaisseur d'au moins une des parties dudit volet.

Elle concerne également un conduit de ventilation pour véhicule automobile comportant un canal extérieur et une série de volets, chacun étant mobile en rotation autour d'un axe, positionnés en cascade parallèlement les uns à côté des autres, caractérisé en ce qu'il comporte au moins un volet tel que décrit ci-dessus.

L'invention porte enfin sur un véhicule automobile comportant un tel conduit de ventilation, positionné en amont ou en aval d'un échangeur de chaleur.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue en perspective d'un conduit d'entrée de l'air de ventilation de face avant d'un véhicule automobile;
- la figure 2 est une vue en coupe d'un dispositif d'obturation du conduit de la figure 1 par des volets, ceux-ci étant en position fermée ;
- la figure 3 est une vue en coupe transversale d'un volet d'obturation du conduit de la figure 1, selon l'art antérieur ;
- la figure 4 est une vue en perspective, de dessous, du volet de la figure 3 ;
- la figure 5 est une vue en coupe d'un volet d'obturation du conduit de la figure 1, dans un mode de réalisation de l'invention, et
- la figure 6 est une vue en coupe, de dessus, du volet de la figure 5 au cours de sa fabrication.

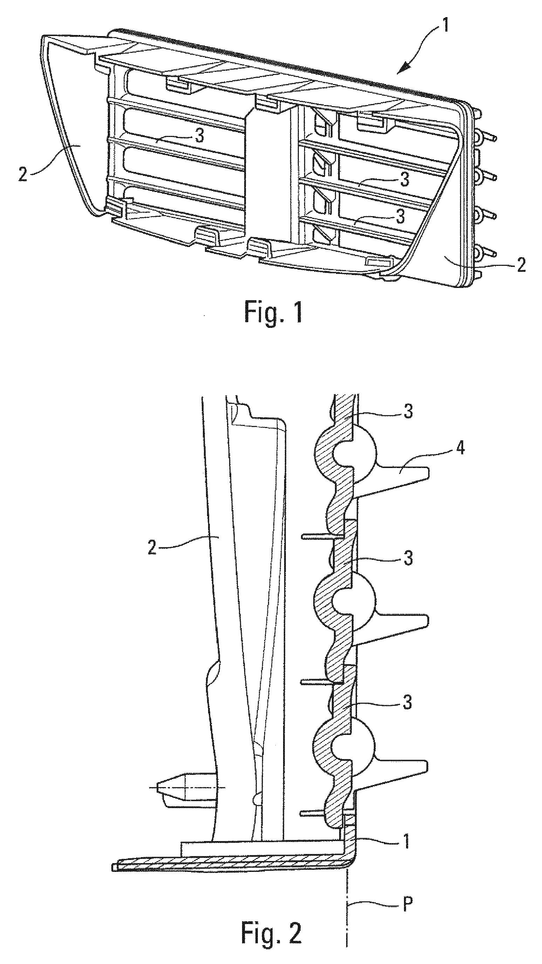

En se référant à la figure 1, on voit un conduit 1 pour le guidage de l'air qui pénètre dans l'enceinte avant d'un véhicule automobile et qui est orienté en direction d'un échangeur de chaleur tel qu'un condenseur ou un radiateur, non-représenté. Ce conduit comporte un canal extérieur 2, de forme sensiblement parallélépipédique, qui rejoint, à l'amont, une grille de calendre, également non représentée, destinée à prévenir une éventuelle pénétration de corps étrangers tout en constituant un élément de style. Il porte, à l'aval, une série de volets 3 qui sont positionnés en cascade les uns au-dessus des autres et qui sont mobiles en rotation, chacun autour d'un axe horizontal. Ceux-ci sont disposés les uns au-dessus des autres de sorte qu'en position fermés ils soient jointifs et qu'ils obstruent complètement la veine d'air.

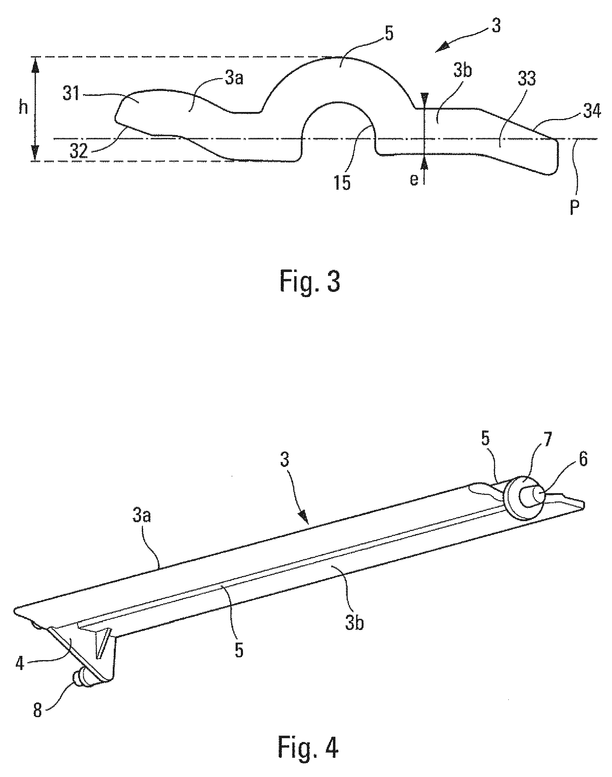

En référence à la figure 2 on voit, en coupe dans un plan vertical orienté selon la direction de circulation de l'air de ventilation, trois volets 3 positionnés les uns au-dessus des autres et portés par la structure du conduit de guidage 1. Les volets sont représentés, ici, au nombre de trois, mais ils sont en nombre suffisant pour couvrir, en position fermés, la totalité de la surface de sortie du conduit, de façon à pouvoir obturer cette surface et ainsi bloquer le passage de l'air sur cette entrée d'air. A une de leurs extrémités les volets, dont la forme sera décrite plus précisément en référence aux figures 3 et 4, comportent une extension radiale qui fait fonction de bras de levier 4 pour les actionner en rotation. On remarque que ces volets présentent à leurs extrémités amont et aval (en référence au sens de circulation de l'air quand ils sont en position ouverts) des surfaces qui coopèrent les unes avec les autres de façon à assurer une étanchéité inter-volets et à empêcher le passage de l'air entre deux volets consécutifs. Telles que représentées ces surfaces coopérantes sont, ici, des surfaces planes ayant la même orientation, ce qui leur permet d'être jointives. Elles sont situées de part et d'autre d'un plan P, ici un plan vertical, passant par ledit axe de rotation.

Les figures 3 et 4 montrent un volet 3, respectivement en coupe transversale et en perspective. Le volet proprement dit, c'est-à-dire la partie qui guide ou qui obstrue le flux d'air, a la forme d'une plaque, d'épaisseur constante e, comportant une partie amont 3a et une partie aval 3b, qui sont séparées par une nervure 5 en forme de U inversé. Les deux parties amont et aval s'étendent longitudinalement selon la direction de l'axe de rotation du volet et transversalement selon un même plan radial par rapport à cet axe de rotation, avec toutefois des ondulations par rapport à ce plan qui tendent à réduire leur impact aérodynamique. La nervure 5 s'étend, quant à elle, perpendiculairement au plan des deux parties amont 3a et 3b et, dans la suite de la description, les mentions supérieur ou inférieur se référeront à la direction d'extension de cette nervure. Sur la face opposée à la nervure on trouve une rainure 15, de même forme, qui s'emboîte dans la nervure 5 de façon à conserver au volet la même épaisseur e au niveau de cette nervure et ainsi, de ne pas augmenter inutilement sa masse.

La fonction de cette nervure est de donner de la rigidité longitudinale au volet pour empêcher les phénomènes vibratoires, ou flottement, qui sont susceptibles d'être créés par l'excitation liée au passage de l'air. L'extrémité amont 31 de la partie amont 3a est arrondie pour former un bord d'attaque au volet et réduire la trainée aérodynamique de celui-ci et elle présente à sa partie inférieure une surface plane 32 faisant un angle donné avec le plan médian du volet ; de même l'extrémité aval 33 de la partie aval 3b a une forme de culot pour également réduire la trainée et elle présente à sa partie supérieure une surface plane 34 qui est orientée selon le même angle que la surface plane amont 32. De la sorte, quand deux volets adjacents sont repliés l'un contre l'autre, la surface plane amont 32 du volet supérieur vient se plaquer contre la surface plane aval 34 du volet inférieur avec laquelle elle est parfaitement jointive, ce qui assure une étanchéité contre une possible circulation d'air entre ces deux volets.

A ses deux extrémités longitudinales le volet 3 comporte des moyens pour sa mise en rotation autour d'un axe qui s'étend sensiblement selon le centre du cercle formant le fond du U de sa nervure 5. Ces moyens consistent en deux tourillons 6 s'étendant longitudinalement, à chacune des extrémités, selon cet axe, au-delà du volet proprement dit. Des disques 7 s'étendant radialement autour de ces tourillons forment une barrière d'étanchéité avec le canal 2 du conduit 1. A une des extrémités on trouve également un dispositif d'actionnement pour la mise en rotation du volet. Celui-ci a la forme d'une plaque radiale 4 qui porte, à distance de l'axe de rotation, un second tourillon 8 sur lequel peut venir se fixer une tringle de commande (non représentée) qui, par un déplacement longitudinal, crée une rotation de la plaque 4 et, de la sorte, la rotation de l'ensemble du volet 3. On constate que la signature aéraulique du volet en position ouverte correspond, dans un sens, à l'extension verticale de la nervure 5 et, dans l'autre, à l'extension verticale de l'extrémité aval 33.

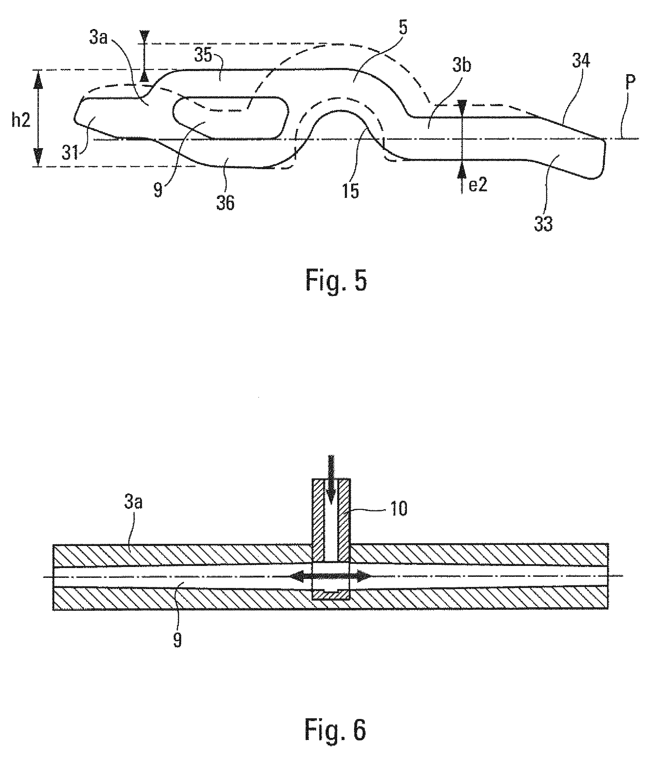

En référence à la figure 5 on voit en trait plein le volet 3 qui constitue la configuration proposée par l'invention, le volet 3 de l'art antérieur ayant été illustré en pointillés pour faciliter la comparaison. L'invention se caractérise par une diminution de l'épaisseur des parois formant le volet 3. Les couches de matière formant tant la partie amont 3a que la partie aval 3b ont une épaisseur e2 qui est inférieure à l'épaisseur e qu'avaient ces couches dans l'art antérieur. A titre de référence, alors que les parois dans l'art antérieur présentaient une épaisseur de 4 mm, ici l'invention propose de réduire cette épaisseur jusqu'à 3 mm.

Comme cette diminution d'épaisseur risque d'engendrer des phénomènes de flottement aérodynamique il convient de compenser ce phénomène en augmentant la rigidité des parties amont et/ou aval. Pour cela la partie amont 3a de la figure 5 présente une cavité fermée 9. Cette cavité s'étend transversalement selon la direction d'extension de la partie amont 3a, dans laquelle elle est entièrement immergée. Ladite cavité est ici délimitée par des parois comprenant des parois s'étendant selon la direction d'arrivée du flux d'air et qui sont séparées par ladite cavité 9.

La pointe amont 31 de la partie amont 3a est identique à celles de l'art antérieur, c'est à dire qu'elle présente un bord arrondi formant le bord d'attaque du volet et une surface plane amont 32 à sa partie inférieure, faisant le même angle que précédemment avec le plan médian du volet. De son côté la partie aval, telle que représentée sur la figure 6, n'est pas modifiée par rapport à la version précédente, à la différence de son épaisseur près ; elle présente notamment la même surface plane aval 34 qui est susceptible de coopérer avec la surface amont 32 d'un volet adjacent.

En aval de la pointe avant 31 la partie amont 3a se divise en deux parois 35, 36, une première paroi, ici supérieure, 35 et une seconde paroi, ici inférieure, 36, dont les épaisseurs peuvent être inférieures à l'épaisseur e2 des autres parois, non dédoublées. La couche supérieure 35 est, par exemple, plane, orientée selon la direction d'arrivée du flux d'air, et se raccorde au sommet de la nervure 5 sans qu'il y ait de ressaut. Le ressaut qui existait dans l'état de l'art entre la pointe avant 31 et la nervure 5, a de ce fait été déplacé de la face amont de la nervure 5 vers l'amont de la couche supérieure 35. On dispose de la sorte d'une cavité dont la taille est optimisée tout en favorisant l'écoulement de l'air sur la face supérieure du volet 3 et en limitant le coefficient de trainée associé.

En ce qui concerne la paroi inférieure 36 sa face inférieure pourra reprendre la forme qu'avait la face inférieure du volet 3 dans l'art antérieur, c'est-à-dire qu'elle reste alignée légèrement au-dessous de la face inférieure de la partie aval 3b, en pouvant aller jusqu'à être alignée avec celle-ci dans un mode particulier de réalisation. Elle laisse ainsi cette face inférieure de la partie aval dans son sillage pour éviter de faire augmenter la surface frontale projetée du volet. On peut considérer que la paroi supérieure 35 permet un arc boutement de la paroi inférieur 36 et/ou de l'extrémité 31 de la partie amont correspondante sur la nervure 5.

Lesdites parois supérieure 35 et inférieure 36 sont, par exemple parallèles.

Au niveau de la surface frontale projetée du volet, la face inférieure de celui-ci (qui sert de base pour la comparaison avec l'art antérieur) bénéficie du désépaississement (e - e2) des parois non dédoublées, alors que la face supérieure bénéficie de l'abaissement du sommet de la nervure qui résulte de ce même désépaississement. Au final la hauteur h2 du volet de l'invention est inférieure à la hauteur h de l'art antérieur. L'écart de hauteur obtenu résulte ainsi du désépaississement (e - e2) des parois de cette même nervure.

Le volet conforme à l'invention pourra en outre présenter un évasement des parois du U de la nervure 5, qui ne sont plus parallèles entre elles et qui s'écartent l'une de l'autre en s'approchant du plan des deux parties 3a, 3b du volet. Cette modification contribue également à abaisser le sommet de la nervure 5 du volet, à épaisseur constante. L'aérodynamique de la face inférieure du volet 3 est en outre améliorée par rapport à l'art antérieur avec un coefficient de trainée Cx réduit et une réduction associée de la force de trainée.

La figure 6 montre un schéma de principe décrivant le procédé de fabrication qui permet d'obtenir la cavité 9 pratiquée dans la partie amont 3a du volet. Elle montre l'injection d'un fluide dans l'épaisseur du volet lors de sa fabrication, ce qui permet de limiter la déformation générale du volet mais aussi un possible défaut de forme de la cavité. Pour cela une aiguille à double sortie 10 est positionnée dans l'empreinte de la pièce, en son milieu. Puis, lors de l'injection de la matière plastique, par exemple un PAGF30, constituant le volet, un fluide est injecté sous pression au milieu de l'épaisseur du volet. Il en résulte une poussée de la matière qui laisse derrière elle une cavité qui se trouve repoussée aux extrémités de la pièce ; l'excroissance ainsi créée est alors coupée après l'injection pour donner la forme voulue aux deux extrémités du volet.

De cette manière, la déformation de la cavité qui est due à la différence de pression entre une position proche de l'aiguille, et une position proche des extrémités du volet, reste faible. Elle entraîne ainsi moins de défaut géométrique que si l'aiguille d'injection était, par exemple, située en bout de volet.

Les figures ont été représentée avec une cavité 9 placée dans la partie amont 3a du volet 3. Il est bien évident qu'une telle cavité peut être placée dans la partie aval 3b ou encore que chacune des deux parties 3a et 3b peut recevoir une cavité de ce type.

A titre de référence, les volets décrits dans les figures ont des épaisseurs de 4 mm pour la version de l'art antérieur alors que dans l'invention cette épaisseur a été réduite, hors les parties dédoublées, à 3 mm, sans que la rigidité du volet en soit dégradée pour autant. Au niveau des surfaces frontales projetées, les hauteurs relevées passent de 9 mm dans l'art antérieur à 6,5 mm dans l'invention. Compte tenu d'une longueur des volets maintenue dans les trois cas à 292 mm, les surfaces projetées passent ainsi de 2628 mm², à 1898 mm², soit une réduction de 28% dans l'invention par rapport à l'art antérieur, sans que la rigidité du volet ne soit dégradée. Parallèlement le gain de masse obtenu avec l'invention est de 26 grammes par volet, provenant essentiellement de la réduction de l'épaisseur de ses parois.

## Revendications

1. Volet d'obturation d'un conduit de ventilation, notamment pour véhicule automobile, s'étendant longitudinalement selon un axe de rotation et comprenant une partie amont (3a) et une partie aval (3b) reliées par une nervure (5) au niveau de laquelle se trouve ledit axe de rotation, lesdites parties amont (3a) et aval (3b) présentant des extrémités situées de part et d'autre d'un plan P passant par ledit axe de rotation de manière à permettre un chevauchement de l'une des extrémités dudit volet par l'autre extrémité d'un même dit volet disposé de manière adjacente, la partie amont et/ou la partie aval étant traversées par une cavité longitudinale (9) s'étendant selon ledit axe de rotation, la ou lesdites parties amont et/ou aval munies de ladite cavité (9) étant situées dans la surface frontale projetée de ladite nervure (5) et de l'extrémité de l'autre partie, dans lequel la ou lesdites parties amont et/ou aval munies de ladite cavité (9) comprennent une première (35) et seconde (36) paroi se trouvant de part et d'autre de ladite cavité (9) correspondante, **caractérisé en ce que** la première paroi (35) comporte une surface plane, parallèle audit plan (P), se raccordant à un sommet de ladite nervure (5).

2. Volet selon la revendication 1 dans lequel ladite cavité (9) est sensiblement centrée entre lesdites première (35) et seconde (36) paroi.

3. Volet selon l'une quelconque des revendications 1 ou 2 dans lequel la seconde paroi (36) comporte une surface plane, parallèle audit plan (P), se raccordant à une base de ladite nervure (5).

4. Volet selon l'une quelconques des revendications précédentes dans lequel ladite seconde paroi (36) et ladite extrémité (31) de ladite partie amont et/ou aval munie de ladite cavité (9) forme une seconde nervure d'orientation opposée à la nervure (5) au niveau de laquelle se trouve ledit axe de rotation du volet, dite première nervure, et ladite première paroi (35) permet un arc boutement de ladite seconde nervure sur ladite première nervure (5).

5. Volet selon l'une quelconque des revendications précédentes dans lequel l'extrémité de la ou desdites parties amont et/ou aval munies de ladite cavité (9) est sensiblement située au niveau de ladite cavité (9) correspondante, selon la direction orthogonale audit plan (P).

6. Volet selon l'une quelconque des revendications précédentes dans lequel la nervure (5) comprenant une rainure (15) au niveau de laquelle est prévu ledit axe de rotation.

7. Volet selon la revendication 6 dans lequel ladite rainure forme un U évasé, les branches du U s'éloignant l'une de l'autre en se rapprochant desdites parties amont (3a) et aval (3b).

8. Volet selon l'une quelconque des revendications précédentes dans lequel ladite cavité (9) est située au niveau de l'une (3a) seulement desdites parties.

9. Volet selon la revendication 8 dans lequel ladite partie (3a) munie de ladite cavité (9) est destinée à être ladite partie amont.

10. Volet selon l'une quelconque des revendications 8 ou 9 dans lequel l'extrémité (31) de ladite partie (3a) munie de ladite cavité (9) est située dans la surface frontale projetée de ladite nervure (5).

11. Procédé de réalisation par injection d'un volet selon l'une des revendications 1 à 10 **caractérisé en ce qu'**il comporte une injection d'un fluide sous pression au milieu de l'épaisseur d'au moins une des parties (3a) dudit volet (3).

12. Conduit de ventilation pour véhicule automobile comportant un canal extérieur (2) et une série de volets (3), chacun étant mobile en rotation autour d'un axe, positionnés en cascade parallèlement les uns à côté des autres, **caractérisé en ce qu'**il comporte au moins un volet selon l'une des revendications 1 à 10.

## Patentansprüche

1. Verschlussklappe einer Belüftungsleitung, insbesondere für ein Kraftfahrzeug, die sich längs entlang einer Drehachse erstreckt und einen stromaufwärtigen Teil (3a) und einen stromabwärtigen Teil (3b) umfasst, die durch eine Rippe (5) verbunden sind, in deren Bereich sich die Drehachse befindet, wobei der stromaufwärtige (3a) und stromabwärtige (3b) Teil Enden aufweisen, die sich beiderseits einer Ebene P befinden, die durch die Drehachse verläuft, um eine Überlappung eines der Enden der Klappe durch das andere Ende einer selben Klappe, die angrenzend angeordnet ist, zu ermöglichen, wobei der stromaufwärtige Teil und/oder der stromabwärtige Teil von einem Längshohlraum (9) durchquert werden, der sich entlang der Drehachse erstreckt, wobei der oder die stromaufwärtigen und/oder stromabwärtigen Teile, die mit dem Hohlraum (9) versehen sind, in der projizierten Frontfläche der Rippe (5) und des Endes des anderen Teils angeordnet sind, wobei der oder die stromaufwärtigen und/oder stromabwärtigen Teile, die mit dem Hohlraum (9) versehen sind, eine erste (35) und eine zweite (36) Wand umfassen, die sich beiderseits des entsprechenden Hohlraums (9) befinden,
**dadurch gekennzeichnet, dass** die erste Wand (35) eine ebene Fläche parallel zur Ebene (P) umfasst, die an eine Spitze der Rippe (5) anschließt.

2. Klappe nach Anspruch 1, bei der der Hohlraum (9) im Wesentlichen zwischen der ersten (35) und der zweiten (36) Wand zentriert ist.

3. Klappe nach einem der Ansprüche 1 oder 2, bei der die zweite Wand (36) eine ebene Fläche parallel zur Ebene (P) umfasst, die an eine Basis der Rippe (5) anschließt.

4. Klappe nach einem der vorhergehenden Ansprüche, bei der die zweite Wand (36) und das Ende (31) des stromaufwärtigen und/oder stromabwärtigen Teils, der mit dem Hohlraum (9) versehen ist, eine zweite Rippe mit einer Ausrichtung bilden, die zu der Rippe (5), in deren Bereich sich die Drehachse der Klappe befindet, erste Rippe genannt, entgegengesetzt ist, und die erste Wand (35) eine Verstrebung der zweiten Rippe auf der ersten Rippe (5) ermöglicht.

5. Klappe nach einem der vorhergehenden Ansprüche, bei der das Ende des oder der stromaufwärtigen und/oder stromabwärtigen Teile, die mit dem Hohlraum (9) versehen sind, im Wesentlichen im Bereich des entsprechenden Hohlraums (9) in orthogonaler Richtung zu der Ebene (P) angeordnet ist.

6. Klappe nach einem der vorhergehenden Ansprüche, bei der die Rippe (5), die eine Nut (15) umfasst, in deren Bereich die Drehachse vorgesehen ist.

7. Klappe nach Anspruch 6, bei der die Nut ein erweitertes U bildet, wobei sich die Schenkel des U voneinander entfernen, wobei sie sich an den stromaufwärtigen (3a) und stromabwärtigen (3b) Teil annähern.

8. Klappe nach einem der vorhergehenden Ansprüche, bei der der Hohlraum (9) im Bereich nur eines (3a) der Teile angeordnet ist.

9. Klappe nach Anspruch 8, bei der der Teil (3a), der mit dem Hohlraum (9) versehen ist, dazu bestimmt ist, der stromaufwärtige Teil zu sein.

10. Klappe nach einem der Ansprüche 8 oder 9, bei der das Ende (31) des Teils (3a), der mit dem Hohlraum (9) versehen ist, in der projizierten Frontfläche der Rippe (5) angeordnet ist.

11. Verfahren zur Herstellung einer Klappe nach einem der Ansprüche 1 bis 10 durch Einspritzen, **dadurch gekennzeichnet, dass** es ein Einspritzen eines Fluids unter Druck in die Mitte der Dicke mindestens eines der Teile (3a) der Klappe (3) umfasst.

12. Belüftungsleitung für ein Kraftfahrzeug, umfassend einen äußeren Kanal (2) und eine Reihe von Klappen (3), die jeweils in Drehung um eine Achse beweglich sind, und die kaskadenartig parallel nebeneinander positioniert sind, **dadurch gekennzeichnet, dass** sie mindestens eine Klappe nach einem der Ansprüche 1 bis 10 umfasst.

## Claims

1. Shutter for a ventilation duct, in particular for a motor vehicle, which extends longitudinally along an axis of rotation, and comprises an upstream part (3a) and a downstream part (3b) which are connected by a rib (5) at which said axis of rotation is located, said upstream (3a) and downstream (3b) parts having ends situated on both sides of a plane P which passes via said axis of rotation, such as to allow one of the ends of said shutter to be overlapped by the other end of a similar said shutter disposed in an adjacent manner, a longitudinal cavity (9), which extends along said axis of rotation, passing through the upstream and/or the downstream part, said upstream and/or downstream part(s) provided with said cavity (9) being situated in the projecting front surface of said rib (5) and of the end of the other part, wherein said upstream and/or downstream part(s) provided with said cavity (9) comprise a first (35) and second (36) wall which are located on both sides of said corresponding cavity (9), **characterized in that** the first wall (35) comprises a flat surface, parallel to said plane (P), which is connected to a top of said rib (5).

2. Shutter according to Claim 1, wherein said cavity (9) is substantially centered between said first (35) and second (36) walls.

3. Shutter according to either of Claims 1 and 2, wherein the second wall (36) comprises a flat surface, parallel to said plane (P), which is connected to a base of said rib (5).

4. Shutter according to any one of the preceding claims, wherein said second wall (36) and said end (31) of said upstream and/or downstream part provided with said cavity (9) form a second rib with orientation opposite that of the rib (5) at which said axis of rotation of the shutter is located, referred to as said first rib, and said first wall (35) permits staying of said second rib on said first rib (5).

5. Shutter according to any one of the preceding claims, wherein the end of said upstream and/or downstream part(s) provided with said cavity (9) is situated substantially at said corresponding cavity (9), along the direction at right-angles to said plane (P).

6. Shutter according to any one of the preceding claims, wherein the rib (5) comprising a groove (15) at which said axis of rotation is provided.

7. Shutter according to Claim 6, wherein said groove forms a widened "U", with the branches of the "U" being spaced from one another as they approach said upstream (3a) and downstream (3b) parts.

8. Shutter according to any one of the preceding claims, wherein said cavity (9) is situated at only one (3a) of said parts.

9. Shutter according to Claim 8, wherein said part (3a) provided with said cavity (9) is designed to be said upstream part.

10. Shutter according to either of Claims 8 and 9, wherein the end (31) of said part (3a) provided with said cavity (9) is situated in the projecting front surface of said rib (5).

11. Method for production by injection of a shutter according to one of Claims 1 to 10, **characterized in that** it comprises injection of a pressurized fluid into the middle of the thickness of at least one of the parts (3a) of said shutter (3).

12. Ventilation duct for a motor vehicle, comprising an outer channel (2) and a series of shutters (3), each being mobile in rotation around an axis, positioned in cascade parallel to and adjacent to one another, **characterized in that** it comprises at least one shutter according to one of Claims 1 to 10.
